Europäisches Patentamt

European Patent Office

Office européen des brevets

(19)

(11) Veröffentlichungsnummer: **0 089 543**

**A1**

## (12) EUROPÄISCHE PATENTANMELDUNG

(21) Anmeldenummer: 83102226.4

(22) Anmeldetag: 07.03.83

(51) Int. Cl.³: **B 65 B 43/42**
B 65 B 59/04, B 65 G 35/04

(30) Priorität: 17.03.82 DE 3209595

(43) Veröffentlichungstag der Anmeldung:
28.09.83 Patentblatt 83/39

(84) Benannte Vertragsstaaten:
CH DE FR GB IT LI

(71) Anmelder: Benz & Hilgers GmbH
Münster Strasse 246
D-4000 Düsseldorf 30(DE)

(72) Erfinder: Pröpper, Wilhelm
Neu Stefenshoven 3a
D-4018 Langenfeld(DE)

(74) Vertreter: Pfeiffer, Helmut
Jagenberg AG Patentwesen Himmelgeister Strasse 107
D-4000 Düsseldorf 1(DE)

(54) Maschine zum Abfüllen und Verpacken von Nahrungsmitteln.

(57) Maschine zum Abfüllen und Verpacken von Nahrungsmitteln mit geradlinig aufeinanderfolgend angeordneten und taktweise betriebenen Arbeitsstationen, denen vermittels ebenfalls taktweise fortbewegten Zellen zum Beispiel Verpackungsbehälter zugeführt werden, die gefüllt, gegebenenfalls gewogen, verschlossen und/oder versiegelt werden, wobei sich die Zellen schrittweise von einer zur anderen Arbeitsstation fortbewegen, wobei hin-und rücklaufende Führungsmittel (12) vorgesehen sind, auf denen die Zellen (18) vorzugsweise ausschliesslich in einer Richtung fortbewegbar gleitbar gelagert sind, und dass zur Fortbewegung der Zellen (18) mindestens eine in Längsrichtung der Maschine (10) parallel zu den Führungsmitteln (12) sich erstreckende drehbar gelagerte Antriebswalze (15) vorgesehen ist, die auf ihrer Aussenmantelfläche (150) einen nach einer vorbestimmten Steuerkurve geformte Indexnut (15″) bzw. einen Indexsteg (15′) trägt, in die mit den Zellen (18) verbundene als Indexbolzen (180) ausgebildete Leitmittel eingreifen.

EP 0 089 543 A1

FIG.1

Benz & Hilgers GmbH

Düsseldorf, den 23.2.1982
Bs/Ms

0089543

Akte B 208

Maschine zum Abfüllen und Verpacken von Nahrungsmitteln.

Die Erfindung betrifft eine Maschine zum Abfüllen und Verpacken von Nahrungsmitteln mit geradlinig aufeinanderfolgend
angeordneten und taktweise betriebenen Arbeitsstationen,
denen vermittels ebenfalls taktweise fortbewegten Zellen
z.B. Verpackungsbehälter zugeführt werden, die gefüllt,
gegebenenfalls gewogen, verschlossen und/oder versiegelt
werden, wobei sich die Zellen schrittweise von einer zur
anderen Arbeitsstation fortbewegen.

Eine Maschine dieser Bauart, die auch als Längsläufer
bezeichnet wird, ist aus der DE-OS2254738 bekannt. Die
Fortbewegung der Zellen von einer Arbeitsstation zur anderen
in Längsrichtung der Maschine wird bei bekannten Maschinenkonstruktionen von in Längsrichtung umlaufenden Ketten übernommen. Derartige Ketten sind jedoch mit zahlreichen
Nachteilen verbunden. Beispielsweise verändert sich während
des Betriebs der Maschine durch Verschleiss oder Temperatureinflüsse die Teilung der Kette, wodurch ständige Justierarbeiten notwendig sind. Bei mit hoher Taktzahl betriebenen
Maschinen muss überdies eine beträchtliche Energie aufgewandt
werden zur Beschleunigung und Abbremsung der Kette für die
taktweise Fortbewegung der Zellen. Schliesslich sind in der
Regel besondere Schutzmassnahmen zu ergreifen, um die Kette
vor Verschmutzung durch während des Verpackungsvorgangs
auslaufende Nahrungsmittel zu schützen. Beispielsweise
können dazu Verkleidungen vorgesehen werden, die jedoch die
Wartungsarbeiten an der Kette behindern. Schliesslich
benötigen die Kettenglieder eine kontinuierliche Schmierung,
die ebenfalls Probleme aufwirft, da Schmiermittel und Nahrungsmittel aus hygienischen Gründen nicht miteinander in Berührung kommen dürfen.

Der Erfindung liegt die Aufgabe zu Grunde, eine neuartige Maschine anzugeben, bei der die vorstehend beschriebenen Nachteile des Kettenantriebs vermieden sind.

Ausgehend von einer Maschine der eingangs genannten Art wird diese Aufgabe durch die im Patentanspruch 1 angegebene Erfindung gelöst.

Vorteilhafte Ausgestaltungen der Erfindung gehen aus den Unteransprüchen hervor.

Die Erfindung wird nachfolgend unter Bezug auf die Zeichnungen näher erläutert. Dabei zeigt:

Figur 1 : Eine schematische Seitenansicht der Maschine, wobei alle für das Verständnis der Erfindung nicht wesentlichen Teil nur andeutungsweise dargestellt sind;

Figur 2 : Eine vergrösserte Teildarstellung der Antriebswalze einer Zelle;

Figur 3 : Eine vergrösserte Teildarstellung einer eine Indexnut aufweisenden Antriebswalze mit einer Zelle;

Figur 4 : Eine vergrösserte Darstellung eines Teilstücks der Führungsmittel (Bereich X aus Figur 1);

Figur 5 : Eine vergrösserte Teildarstellung des endseitigen Teils der Maschine mit Blickrichtung B aus Figur 1.

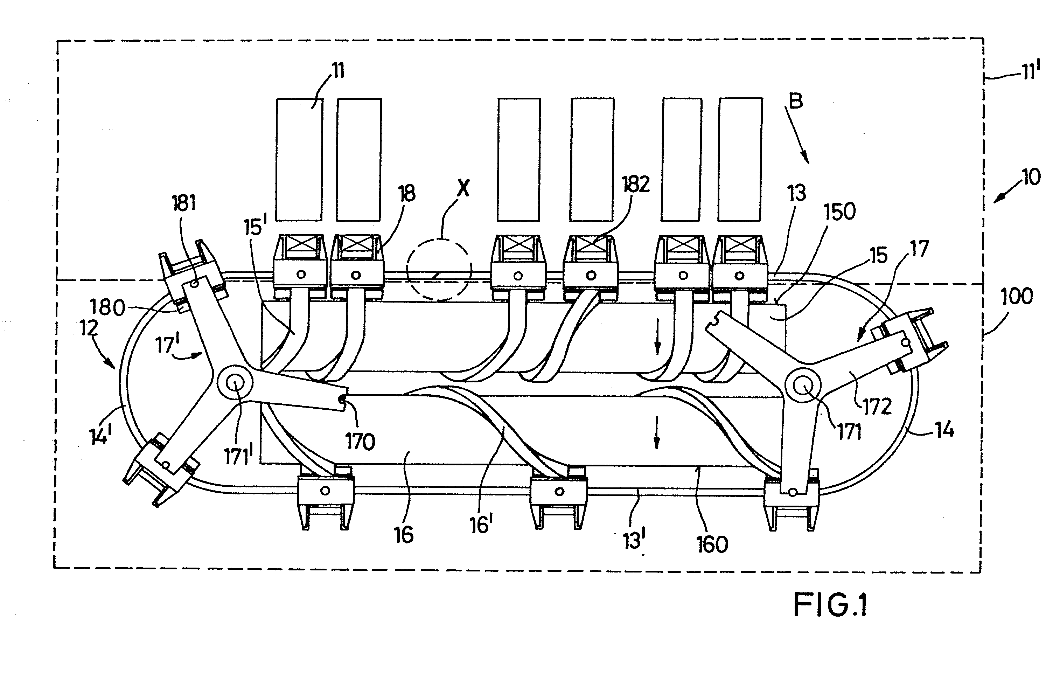

Figur 1 zeigt eine schematische Seitenansicht einer
Maschine zum Abfüllen und Verpacken von Nahrungsmitteln,
bei der alle für das Verständnis der Erfindung nicht
wesentlichen Maschinenteile weggelassen oder nur andeutungsweise dargestellt sind. Die Maschine 10 umfasst einen
andeutungsweise gestrichelt dargestellten aus Oberteil 11'
und Unterteil 100 bestehenden Maschinenrahmen, in dem alle
für die Funktion der Maschine notwendigen Teile angeordnet
sind. Die Maschine 10 umfasst mehrere in Figur 1 lediglich
schematisch angedeutete Arbeitsstationen 11, die in Längsrichtung der Maschine 10 hintereinander angeordnet sind
und die vorzugsweise taktweise betrieben werden. Bei diesen
Arbeitsstationen 11 wird beispielsweise ein herangeführter
Verpackungsbehälter 182 zunächst mit einem zu verpackenden
Nahrungsmittel gefüllt. In einer darauf folgenden zweiten
Arbeitsstation wird der gefüllte Verpackungsbehälter 182
gewogen. In einer weiteren Arbeitsstation wird der Behälter
verschlossen; in einer folgenden Arbeitsstation zusätzlich
versiegelt und/oder mit einer bestimmten Kennzeichnung
versehen. Auf die genaue Funktionsweise der Arbeitsstationen 11 wird an dieser Stelle nicht näher eingegangen,
da sie für die Erfindung ohne Belang sind.

Die den Arbeitsstationen 11 zugeführten Verpackungsbehälter
182 werden beispielsweise durch Zellen 18 herangeführt, die
sich schrittweise von einer zur anderen Arbeitsstation 11
fortbewegen. Zu diesem Zweck sind die Zellen 18 vorzugsweise ausschliesslich in einer Richtung fortbewegbar auf
Führungsmitteln 12 gleitbar gelagert. Der Antrieb der
Zellen 18 erfolgt durch mindestens eine in Längsrichtung
der Maschine 10 parallel zu den Führungsmitteln 12 sich
erstreckende drehbar gelagerte Antriebswalze 15, die auf
ihrer Aussenmantelfläche 150 eine nach einer vorbestimmten
Steuerkurve geformte Indexnut 15" bzw. einen Indexsteg 15'
trägt. In die Indexnut oder in den Indexsteg greifen
mit den Zellen 18 verbundene als Indexbolzen 180 ausgebildete Leitmittel ein. Die Führungsmittel 12 bestehen aus mindestens einem in einer senkrechten Ebene liegenden
geschlossenen Profil, welches zwei im wesentlichen parallel
zueinander verlaufende gerade Abschnitte 13, 13' umfasst,
die anfangs- und endseitig über Teile eines Kreisumfangs
bildende Verbindungsstücke 14, 14' miteinander verbunden
sind. Wie insbesondere aus der vergrösserten Darstellung
in Figur 5 hervorgeht,   sitzen die Zellen 18 derart
gleitbar gelagert auf den Führungsmitteln 12 auf, dass
im wesentlichen nur eine Translationsbewegung möglich ist,
und eine sichere Führung der Zellen 18  bei deren Hin-
und Rückbewegung erfolgt, wobei, wie aus Figur 1 deutlich
wird ,bei der rücklaufenden Bewegung die Zellen 18 über
Kopf transportiert werden. Unter Umständen ist es wünschenswert, die Zellen 18 auswechselbar zu gestalten, um beispielsweise die Maschine 10 an ein anderes andere Abmessungen
aufweisendes Verpackungsprodukt anzpassen.  Zu diesem Zweck
wird  vorteilhaft  das Führungsmittel 12 an zumindest einer
Stelle auftrennbar ausgebildet.  Dies wird an Hand von Figur
4 beispielhaft erläutert, die eine vergrösserte Darstellung
des Teilbereichs X aus Figur 1 zeigt. Beispielsweise wird
ein Teilstück  120 des Führungsmittels 12  herausnehmbar
ausgebildet, eine Nut- und Federverbindung ermöglicht dabei
ein leichtes Auseinandernehmen und Zusammensetzen des
Führungsmittels ,indem das Teilstück 120 in Richtung des
Doppelpfeils 122 vor- oder zurückbewegt wird. Gegebenenfalls
kann im zusammengesetzten Zustand dieses Teilstück  des
Führungsmittel 12 durch versenkbar angeordnete Bolzen 121
in seiner Lage fixiert werden.  In einem anderen Ausführungsbeispiel der Erfindung, das nicht durch eine gesonderte
Figur illustriert ist, ist das Teilstück 120 des Führungsmittels 12 scharnierartig ausklappbar ausgebildet.

Um eine Vorwärtsbewegung der Zellen 18  in Förderungsrichtung der Maschine 10 und eine anschliessende Rückförderung der Zellen 18 zu erhalten, werden zweckmässig
in einer Ebene übereinander angeordnet innerhalb der
Führungsmittel 12 liegend 2 Antriebswalzen 15, 16 vorgesehen ,

von denen die erste Antriebswalze 15 die Fortbewegung
der Zellen 18 in Vorwärtsrichtung und die zweite Antriebswalze 16 die Rückführung der Zellen 18 übernimmt
(Figur 1). Wie bereits zuvor erwähnt, werden die beiden
geradlinig verlaufenden Teilstücke 13, 13' der Führungsmittel 12 über kopfseitig und endseitig der Maschine 10
angeordnete Teile eines Kreisumfangs bildende Verbindungsstücke 14, 14' miteinander verbunden. Über das endseitig
der Maschine 10 angeordnete Verbindungsstück 14 kehren die
Zellen 18 nach Passieren der Arbeitsstationen 11 über den
graden Abschnitt 13' des Führungsmittels 12 zurück und
werden dort über das Verbindungsstück 14' wieder auf den
anderen graden Abschnitt 13 des Führungsmittels 12 zurückgeleitet, welches die Zellen 18 an den Arbeitsstationen 11
vorbeiführt. Zwecks Übergabe der auf den Führungsmitteln
12, 13, 13',14 und 14' geführten Zellen von einem graden
Abschnitt 13 der Führungsmittel 12 auf den anderen graden
Abschnitt 13' und umgekehrt, sind im Kopf- und Endbereich der
Maschine 10 auf senkrecht zur Längsrichtung der Maschine
angeordneten Achsen 171, 171' sternförmig ausgebildete
Übertragungselemente 17, 17' drehbar gelagert, die taktmässig die jeweils auf einem der graden Abschnitte 13, 13'
der Führungsmittel 12 eintreffenden Zellen 18 erfassen und
diese auf den in Gegenrichtung führenden anderen Teil
13 bzw. 13' der Führungsmittel 12 umsetzen. Zu diesem
Zweck umfassen die sternförmig ausgebildeten Übertragungselemente 17,17' auf dem Unfang gleichmässig verteilt,
angeordnete sich in Radialrichtung nach aussen hin
erstreckende Fortsätze 172, die zwecks Eingriff in seitlich
an den Zellen 18 hervorragend angeordnete Bolzen 181 mit
einer Ausnehmung 170 versehen sind. Der Eingriff eines
solchen Fortsatzes 172 in einen mit der Zelle 18 verbundenen
Bolzen181istdeutlich erkennbar aus Figur 5, die eine vergrösserte Detaildarstellung der Maschine mit Blickrichtung B
aus Figur 1 darstellt.

Die Walzen, 15, 16' und die Übertragungselemente 17, 17'
können zweckmässig durch eine einzige Antriebseinheit unter
Zwischenschaltung entsprechender Getriebe angetrieben
werden. Antriebseinheit und Getriebe sind herkömmlicher
Bauart und in der Zeichnung nicht näher erläutert.

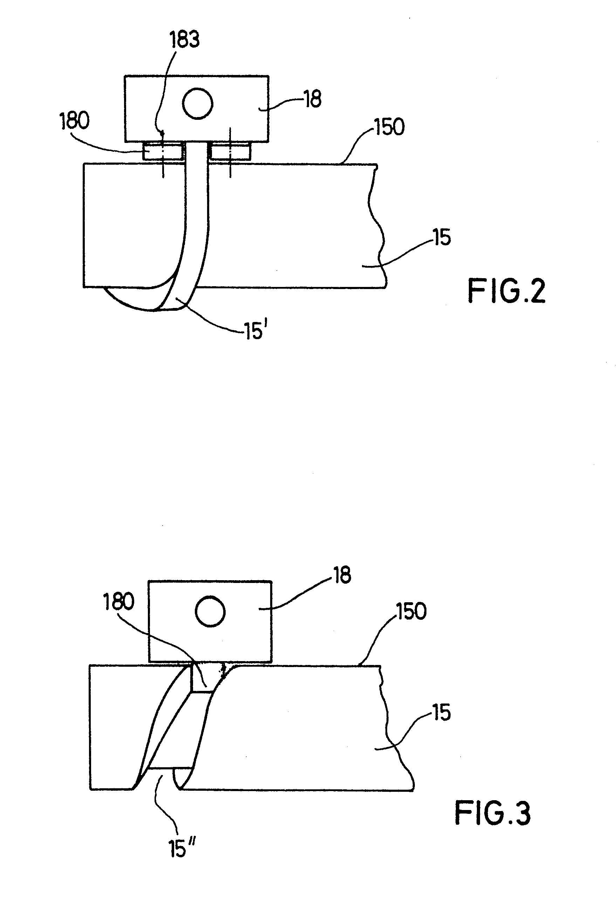

Wie insbesondere aus Figur 1 und den vergrösserten Detaildarstellungen der Figur 2 und Figur 3 hervorgeht, greifen
mit den Zellen 18 über Achsen 183 drehbar verbundene als
Indexbolzen 180 ausgebildete Leitmittel in die auf der
Mantelfläche 150 bzw. 160 der Walzen 15, 16 angeordneten
Indexstege 15'(Figur 1, Figur 2) oder Indexnuten 15"
(Figur 3) ein. Bei Rotation der Walzen 15, 16 um ihre
Längsachse werden die Zellen 18 dadurch entlang der
Führungsmittel 12 entsprechend der Charakteristik der nach
einer vorbestimmten Steuerkurve geformten Indexstege 15'
bzw. Indexnuten 15" in Längsrichtung der Maschine fortbewegt. Die auf der Mantelfläche 150 der Walze 15 angeordneten Indexstege 15' bzw. Indexnuten 15" werden dabei
zweckmässig mit solchen Steigungen versehen, dass für eine
vorgegebene Taktzeit die Zellen 18 unterhalb einer
jeweiligen Arbeitsstation 11 in Ruhe verharren, um dort
jeweils die Ausführung des vorgesehenen Arbeitsschrittes
z.B. das Abfüllen des Nahrungsmittels oder das Verschliessen
oder Versiegeln des Behälters zu ermöglichen. Dies wird
auf einfache Weise dadurch erreicht, dass der Indexsteg
15' oder die Indexnut 15" auf einem bestimmten Teil ihrer
Länge die Steigung null erhält. Zwecks Überwindung des
Zwischenraums zwischen den benachbarten Arbeitsstationen
11 trägt die Indexnut 15" oder der Indexsteg 15' eine
entsprechende Steigung, um die Zelle 18 über diesen
Abstand fortzubewegen. Der Abstand der Arbeitsstationen 11
und die Zuordnung der eine mehr oder weniger grosse
Steigung aufweisenden Indexnut- bzw. Indexstegbereiche kann
dabei zweckmässig so gewählt werden, dass in einem
bestimmten Taktintervall der Maschine 10 ein Teil der in
Vorwärtsrichtung fortbewegten Zellen während des Einlaufs in eine Arbeitsposition abgebremst wird, während ein anderer Teil der Zellen 18 während des Auslaufens aus einer zuvor eingenommenen Arbeitsposition unterhalb einer Arbeitsstation 11 bechleunigt wird. Auf diese Weise ist es möglich, den Energiebedarf für den Antrieb der Walzen 15, 16 und die Fortbewegung der Zellen 18 auf einem möglichst niedrigen Niveau zu optimieren.

Da die Zellen 18 bei ihrer Rückführung auf dem graden Abschnitt 13' zu keiner Zeit unterhalb einer Arbeitsstation verharren müssen, wird der auf der Aussenmantelfläche 160 der Walze 16 angeordnete Indexsteg 16' vorzugsweise so ausgebildet , dass er eine konstante Steigung aufweist. Bei gleichmässiger Umdrehung der Walze 16 um ihre Längsachse werden dann die Zellen 16 mit konstanter Geschwindigkeit auf dem graden Abschnitt 13' der Führungsmittel 12 zurückbefördert.

Die Arbeitsweise der Maschine 10 ist durch die Anordnung der Arbeitsstationen 11 in Längsachsenrichtung und durch die Vorgabe der unterschiedliche Steigungen aufweisenden Indexnut 15" bzw. des Indexsteges 15' auf der Walze 15 festgelegt. Es ist jedoch selbstverständlich möglich, die Maschine 10 durch eine abweichende Anordnung der Arbeitsstationen 11 und durch Auswechseln der eine anders verlaufende Indexnut 15" bzw. einen anders verlaufenden Indexsteg 15' aufweisenden Walze 15 auf eine andere Betriebsweise umzurüsten.

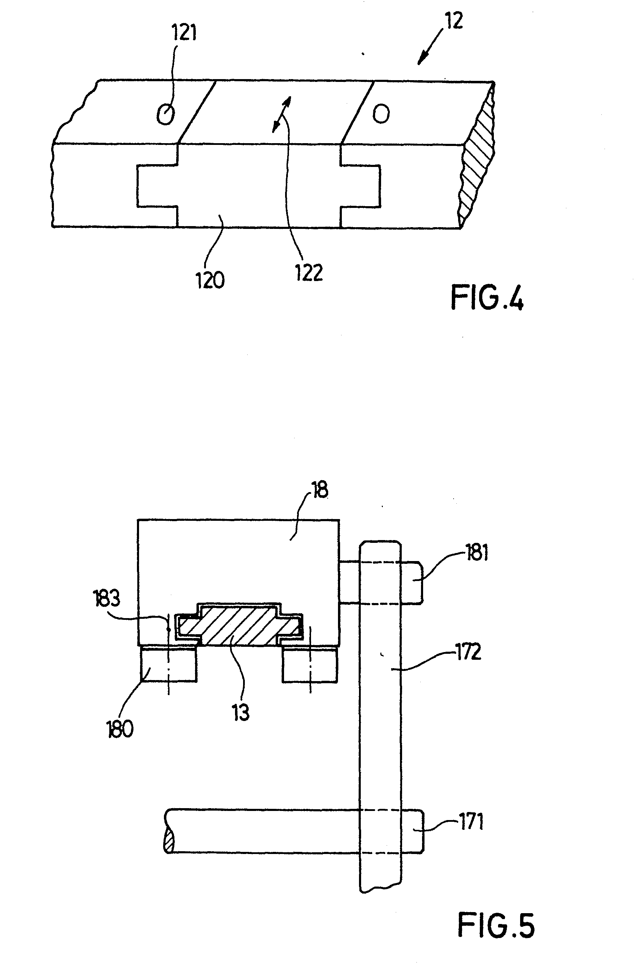

Aus Figur 1 und der dazugehörigen vergrösserten Detaildarstellung gemäss Figur 4 geht hervor, dass die Führungsmittel 12 auf dem graden Abschnitt 13 (Bereich X gemäss Figur 1) auftrennbar ausgebildet sind. Es ist selbstverständlich möglich, diese Trennstelle auch in andere Teilbereiche der Führungsmittel 12 beispielsweise in die kopf- oder endseitig angeordneten Teile eines Kreisbogens bildenden Verbindungsmittel 14, 14' zu verlegen.

**0089543**

In der Praxis werden dazu selbstverständlich diejenigen Bereiche der Maschinen ausgewählt, die für ein Auswechseln der Zellen 18 leicht zugänglich sind.

0089543

Benz & Hilgers GmbH           Düsseldorf,den 25.2.1982
                             Bs/Ms


Akte B 208


Patentansprüche:


1. Maschine zum Abfüllen und Verpacken von Nahrungsmitteln
   mit geradlinig aufeinanderfolgend angeordneten und
   taktweise betriebenen Arbeitsstationen, denen vermittels
   ebenfalls taktweise fortbewegten Zellen zum Beispiel
   Verpackungsbehälter zugeführt werden, die gefüllt,
   gegebenenfalls gewogen, verschlossen und/oder versiegelt werden, wobei sich die Zellen schrittweise von
   einer zur anderen Arbeitsstation fortbewegen, d a -
   d u r c h  g e k e n n z e i c h n e t, dass hin- und
   rücklaufende Führungsmittel (12) vorgesehen sind, auf
   denen die Zellen (18) vorzugsweise ausschliesslich
   in einer Richtung fortbewegbar gleitbar gelagert sind,
   und dass zur Fortbewegung der Zellen (18) mindestens
   eine in Längsrichtung der Maschine (10) parallel zu den
   Führungsmitteln (12) sich erstreckende drehbar  gelagerte Antriebswalze (15) vorgesehen ist, die auf ihrer
   Aussenmantelfläche (150) eine nach einer vorbestimmten
   Steuerkurve geformte Indexnut (15") bzw. einen Indexsteg (15') trägt, in die mit den Zellen (18) verbundene
   als Indexbolzen (180) ausgebildete Leitmittel eingreifen.

2. Maschine nach Anspruch 1 ,d a d u r c h  g e k e n n -
z e i c h n e t,  dass mindestens die Führungsmittel
(12) aus einem in einer senkrechten Ebene liegenden
geschlossenen Profil bestehen, welches zwei im wesentlichen parallel zueinander verlaufende gerade Abschnitte
(13, 13') umfasst, die anfangs- und endseitig über
Teile eines Kreisumfangs bildende Verbindungstücke
(14, 14') miteinander verbunden sind.

3. Maschine nach einem der Ansprüche 1  und 2 ,d a d u r c h
g e k e n n z e i c h n e t,  dass die Führungsmittel
(12) zwecks Entnahme bzw. Einführung von Zellen (18) an
zumindest einer Stelle auftrennbar ausgebildet sind.

4.. Maschine nach einem der Ansprüche 1  bis 3 ,  d a -
d u r c h  g e k e n n z e i c h n e t,  dass ein
Teilstück (120) der Führungsmittel (12) herausnehmbar
oder scharnierartig ausklappbar ausgebildet ist.

5. Maschine nach einem der Ansprüche 1 bis 4, d a -
d u r c h  g e k e n n z e i c h n e t,  dass in einer
Ebene übereinander angeordnet innerhalb der Führungsmittel (12) liegend  2 Antriebswalzen (15, 16) vorgesehen sind, von denen die erste Antriebswalze (15) die
Fortbewegung der Zellen (18) in Vorwärtsrichtung  und
die zweite Antriebswalze (16) die Rückführung der
Zellen (18) übernimmt.

6. Maschine  nach einem der Ansprüche 1 bis 5,
d a d u r c h  g e k e n n z e i c h n e t,  dass die
für die Rückführung der Zellen (18) verantwortliche
Antriebswalze (16) einen eine konstante Steigung aufweisenden Indexsteg (16') bzw. eine Indexnut (15")
aufweist.

- 3 -                              0089543

7.  Maschine nach einem der Ansprüche 1 bis 6,
    d a d u r c h   g e k e n n z e i c h n e t, dass im
    Kopf- und Endbereich der Maschine (10) auf senkrecht
    zur Längsrichtung der Maschine angeordneten Achsen (171,
    171') sternförmig ausgebildete Übertragungselemente
    (17, 17') drehbar gelagert sind, die taktmässig die
    jeweils auf einem der geraden Abschnitte (13, 13')
    der Führungsmittel (12) eintreffenden Zellen (18) erfassen und diese auf den in Gegenrichtung führenden
    Teil (13, 13 ) der Führungsmittel (12) umsetzen.

8.  Maschine nach einem der Ansprüche 1 bis 7,
    d a d u r c h   g e k e n n z e i c h n e t, dass die
    sternförmig ausgebildeten Übertragungselemente (17, 17')
    auf dem Umfang gleichmässig verteilt in Radialrichtung
    sich nach aussen erstreckende Fortsätze (172) tragen,
    die zwecks Eingriff in seitlich an den Zellen (18)
    vorragend angeordneten Bolzen (181) mit einer Ausnehmung
    (170) versehen sind.

FIG.1

FIG.2

FIG.3

FIG.4

FIG.5

Europäisches Patentamt

**EUROPÄISCHER RECHERCHENBERICHT**

**0089543**
Nummer der Anmeldung

EP 83 10 2226

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A-1 074 354 (SCHWEIZERISCHE INDUSTRIEGESELLSCHAFT) <br> * Insgesamt * | 1,2,5, 7,8 | B 65 B 43/42 <br> B 65 B 59/04 <br> B 65 G 33/04 |
| Y | | 3,4 | |
| | --- | | |
| Y | US-A-2 997 191 (FINSTON) <br> * Spalte 3, Zeilen 49-57; Abbildungen 3-5 * | 3,4 | |
| | --- | | |
| X | DE-C- 858 664 (HESSER) <br> * Seite 1, Zeile 1 - Seite 2, Zeile 88; Abbildungen 1,2 * | 1 | |
| | ----- | | |

**RECHERCHIERTE SACHGEBIETE (Int. Cl. ³)**

B 65 B
B 65 G

Der vorliegende Recherchenbericht wurde für alle Patentansprüche erstellt.

| Recherchenort <br> DEN HAAG | Abschlußdatum der Recherche <br> 28-06-1983 | Prüfer <br> CLAEYS H.C.M. |
|---|---|---|